# EUROPÄISCHE PATENTANMELDUNG

(11) **EP 0 965 491 A2**
(43) Veröffentlichungstag der Anmeldung: **22.12.1999**
(21) Anmeldenummer: 99110541.2
(22) Anmeldetag: 01.06.1999
(51) Int. Cl.: B60R 16/02

(54) **Fernsteuerung für ein Kraftfahrzeug**

(30) Priorität: 16.06.1998 DE 19826847
(71) Anmelder: Mannesmann VDO Aktiengesellschaft, 60388 Frankfurt am Main (DE)
(72) Erfinder: Zintler, Albert, 64521 Gross-Gerau (DE)
(74) Vertreter: Klein, Thomas, Dipl.-Ing.

(57) **Zusammenfassung**

Eine Fernsteuerung für ein Kraftfahrzeug (1) hat in dem Kraftfahrzeug (1) zusätzlich zu einer Empfangseinheit (4) für Steuerbefehle eine Sendeeinheit (3) für über eine Antenne (2) zu sendende Rückmeldungen über ausgeführte Steuerbefehle. Eine Befehlseingabeeinheit (6) ist als Mobiltelefon ausgebildet und ermöglicht es deshalb, über große Entfernungen Steuerbefehle zu senden.

## Beschreibung

Die Erfindung betrifft eine Fernsteuerung für ein Kraftfahrzeug, welche eine Befehlseingabeeinheit und eine in dem Kraftfahrzeug anzuordnende Befehlsempfangseinheit aufweist.

Fernsteuerungen der vorstehenden Art sind bei heutigen Kraftfahrzeugen bekannt und gebräuchlich. Sie ermöglichen es insbesondere, Türschlösser zu betätigen, ohne dass umständlich mit einem Schlüssel hantiert werden muss. In jüngster Zeit hat man damit begonnen, auch andere Einrichtungen als die Türschlösser durch eine Fernsteuerung betätigbar auszubilden, beispielsweise das Schiebedach, die Fensterheber, die Standheizung oder die Klimaanlage.

Mit Funksignalen arbeitende Fernsteuerungen, wie sie beispielsweise in großer Zahl bei automatischen Garagenbetätigungen gebräuchlich sind, kann man Steuerbefehle in einem relativ großen Abstand vom Empfänger und ohne genaue Ausrichtung des Senders zum Empfänger hin erteilen. Nachteilig ist bei Verwendung solcher mit Funk arbeitender Fernsteuerungen jedoch, dass die Ausführung des Befehls nicht mehr zuverlässig erkennbar ist.

Der Erfindung liegt das Problem zugrunde, eine Fernsteuerung der eingangs genannten Art so auszubilden, dass auch bei größerer Entfernung von der zu betätigenden Einrichtung die Ausführung des Steuerbefehls zuverlässig erkennbar bzw. zurückgemeldet wird.

Dieses Problem wird erfindungsgemäß dadurch gelöst, dass zusätzlich eine ebenfalls im Kraftfahrzeug anzuordnende Sendeeinheit für zur Befehlseingabeeinheit zu sendende Rückmeldungen über ausgeführte Steuerbefehle vorgesehen ist.

Eine solche Fernsteuerung erlaubt eine zuverlässige Kontrolle der Ausführung gegebener Steuerbefehle. Dadurch kann man zum Beispiel im Winter vor Benutzung eines Kraftfahrzeugs von der Wohnung aus die Standheizung über die Fernsteuerung einschalten und sich dabei zugleich überzeugen, ob der Steuerbefehl richtig ausgeführt wurde. Die erfindungsgemäße Fernsteuerung ermöglicht somit einen bidirektionalen Datenaustausch.

Die Fernsteuerung vermag über besonders große Entfernungen zu arbeiten und kann auch in geschlossenen Räumen und ohne Ausrichtung auf das anzusteuernde Gerät benutzt werden, wenn die Befehlseingabeeinheit zur Erzeugung von Funksignalen ausgebildet ist.

Besonders kostengünstig ist die Erfindung zu verwirklichen, wenn die Befehlseingabeeinheit ein Telefon ist, weil dann ein gebräuchliches Gerät lediglich um Zusatzfunktionen erweitert werden muss. Weiterhin können durch ein solches Telefon über das Telefonnetz aus beliebigen Entfernungen Fernsteuerbefehle gegeben werden.

Da Kraftfahrer oftmals ohnehin ein Mobiltelefon mit sich führen und die Reichweite solcher Mobiltelefone wesentlich höher ist als die der bisher bekannten Funkfernsteuerungen, ist es vorteilhaft, wenn das Telefon ein Mobiltelefon ist.

Die Rückmeldung kann auf verschiedene Weise, beispielsweise optisch oder akustisch erfolgen. Besonders vorteilhaft ist es, wenn das Telefon ein Display zur Anzeige der Rückmeldungen hat.

Die Steuerbefehle können sogar durch einfaches Sprechen gegeben werden, wenn die Befehlseingabeeinheit Spracherkennungsmittel zur Eingabe von Befehlen durch Sprechen hat. Eine solche Ausführungsform ist bei Verwendung eines Telefons als Befehlseingabeeinheit besonders leicht zu verwirklichen, weil dieses bereits ein Mikrofon und Mittel zur Umwandlung der Schallsignale in elektrische Signale aufweist.

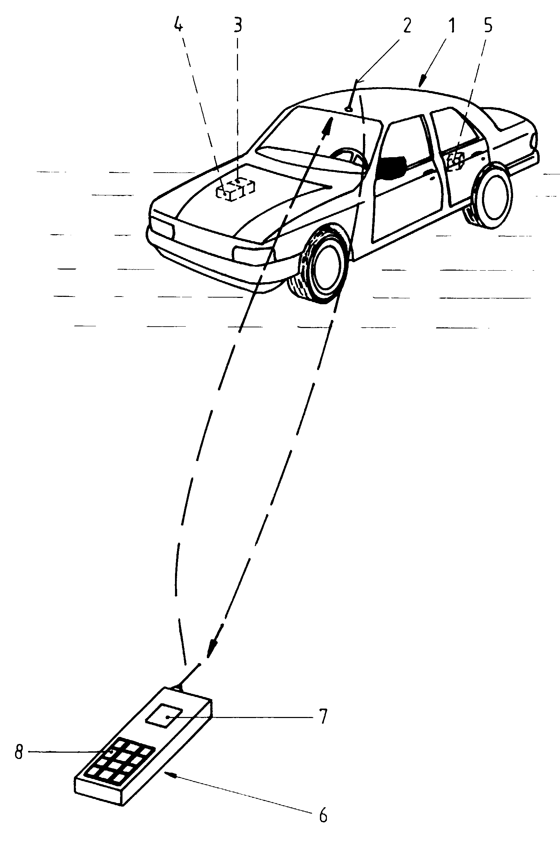

Die Erfindung lässt verschiedene Ausführungsformen zu. Zur weiteren Verdeutlichung ihres Grundprinzips wird nachfolgend auf die Zeichnung Bezug genommen, welche schematisch das Grundprinzip der Erfindung verdeutlicht.

Die Zeichnung zeigt ein Kraftfahrzeug 1, welches eine Antenne 2 hat. Diese Antenne 2 ist mit einer Sendeeinheit 3 und einer Empfangseinheit 4 verbunden. Von der Antenne 2 empfangene Befehle werden von der Empfangseinheit 4 empfangen und einem Steuergerät 5 zugeführt, welches beispielsweise Teil eines Türschließsystems ist. Wurde das Türschließsystem erfolgreich betätigt, dann wird eine Rückmeldung von der Sendeeinheit 3 über die Antenne 2 abgestrahlt.

Links von dem Kraftfahrzeug 1 ist eine bei diesem Ausführungsbeispiel als Mobiltelefon ausgebildete Befehlseingabeeinheit 6 mit einem Display 7 und einer üblichen Tastatur 8 dargestellt. Mittels dieser Befehlseingabeeinheit 6 kann man durch Eingabe unterschiedlicher Steuerbefehle unterschiedliche Funktionen des Kraftfahrzeugs ansteuern, beispielsweise von seinem Wohnzimmer aus kurz vor Antritt einer Reise die Heizung oder Klimaanlage des Kraftfahrzeugs einschalten.

## Patentansprüche

1. Fernsteuerung für ein Kraftfahrzeug, welche eine Befehlseingabeeinheit und eine in dem Kraftfahrzeug anzuordnende Befehlsempfangseinheit aufweist, **dadurch gekennzeichnet**, dass zusätzlich eine ebenfalls im Kraftfahrzeug (1) anzuordnende Sendeeinheit (3) für zur Befehlseingabeeinheit zu sendende Rückmeldungen über ausgeführte Steuerbefehle vorgesehen ist.

2. Fernsteuerung nach Anspruch 1, **dadurch gekennzeichnet**, dass die Befehlseingabeeinheit (6) zur Erzeugung von Funksignalen ausgebildet ist.

3. Fernsteuerung nach Anspruch 2, **dadurch gekennzeichnet**, dass das die Befehlseingabeeinheit ein Telefon ist.

4. Fernsteuerung nach Anspruch 3, **dadurch gekennzeichnet**, dass das Telefon ein Mobiltelefon ist.

5. Fernsteuerung nach den Ansprüchen 3 oder 4, **dadurch gekennzeichnet**, dass das Telefon ein Display zur Anzeige der Rückmeldungen hat.

6. Fernsteuerung nach zumindest einem der vorangehenden Ansprüche, **dadurch gekennzeichnet**, dass die Befehlseingabeeinheit (6) Spracherkennungsmittel zur Eingabe von Befehlen durch Sprechen hat.
